# EUROPÄISCHE PATENTSCHRIFT

(11) **EP 0 612 925 B1**
(45) Veröffentlichungstag und Bekanntmachung des Hinweises auf die Patenterteilung: **16.07.1997**
(21) Anmeldenummer: 94101024.1
(22) Anmeldetag: 25.01.1994
(51) Int. Cl.: F16C 11/06

(54) **Zapfengelenk**
Pivot joint
Articulation à pivot

(30) Priorität: 20.02.1993 DE 4305341
(43) Veröffentlichungstag der Anmeldung: 31.08.1994
(73) Patentinhaber: TRW Fahrwerksysteme GmbH & Co. KG, 40547 Düsseldorf (DE)
(72) Erfinder: Broszat, Lothar, D-40789 Monheim (DE)
(74) Vertreter: Stenger, Watzke & Ring Patentanwälte

(56) Entgegenhaltungen:
- DE-A- 3 905 474
- DE-C- 1 098 382
- GB-A- 796 706
- US-A- 2 274 420
- US-A- 3 090 642
- US-A- 3 343 856

## Beschreibung

Die Erfindung betrifft ein Zapfengelenk mit einem durch einen Deckel verschlossenen Gehäuse, in dem ein Kugelzapfen über eine kugelringförmige Lagerfläche mittels einer eingesetzten Lagerschale spielfrei verdrehbar und innerhalb eines begrenzten Bereiches entgegen einer Rückstellkraft verschwenkbar gelagert ist, wobei der Kugelzapfen mit einer dem Zapfenschaft gegenüberliegenden kegelförmigen Ansenkung für eine Kugel versehen ist, die zur Erzeugung der Rückstellkraft durch eine sich am Deckel abstützende Feder belastet ist.

Ein dem voranstehenden Zapfengelenk ähnliches Kugelgelenk ist aus US-A-3 090 642 bekannt. Bei diesem bekannten Gelenk handelt es sich nicht um ein eigentliches Zapfengelenk mit Führungsaufgaben gegen Kippen, sondern um ein voll bewegliches Kugelgelenk, das bei einer Auslenkung keine führende Funktion hat und auch bei kleineren Ausschlägen keinen Rückstelleffekt erzeugt. Durch eine eine bogenförmige Führung für die Kugel bildende Platte wird ein unterschiedlicher Verschwenkbereich in zwei rechtwinklig aufeinander stehenden Richtungen erzielt, wobei lediglich innerhalb des größeren Schwenkbereiches eine Rückstellkraft auf den Kugelzapfen ausgeübt wird. Um diese unterschiedlichen Schwenk- oder Kippbereiche zu realisieren und die notwendige Funktion des bekannten Kugelgelenkes sicherzustellen, muß die Platte durch eine Nase unverdrehbar im Gehäuse gehalten werden.

Ausgehend von diesem bekannten Stand der Technik liegt der Erfindung die **Aufgabe** zugrunde, ein Zapfengelenk der eingangs beschriebenen Art zu schaffen, das bei gleichzeitiger Verringerung der Herstellungskosten wegen des Wegfalls hoher Genauigkeiten eine vorherbestimmbare und vom Verschleiß im wesentlichen unabhängige Rückstellkraft gewährleistet.

Die **Lösung** dieser Aufgabenstellung durch die Erfindung ist dadurch gekennzeichnet, daß die Feder als Tellerfeder ausgebildet ist, die mit ihrer konvexen Seite an der Kugel anliegt und sich mit ihrem Rand am Deckel abstützt.

Bei dem erfindungsgemäß ausgebildeten Zapfengelenk sind keine extrem genauen Fertigungstoleranzen zur Erzielung einer bestimmten Rückstellkraft notwendig, da durch das Zusammenwirken der sich am Deckel abstützenden Tellerfeder mit der in der Ansenkung des Kugelzapfens eingesetzten Kugel eine definierte Rückstellkraft erzielt wird, die unabhängig von den jeweiligen Toleranzen ist, wobei die Rückstellkraft mit größer werdender Auslenkung entsprechend der Federkennlinie und der Federform zunimmt. Somit ist durch eine geeignete Auswahl der Feder bzw. des Federmaterials eine gezielte Einstellung der Rückstellkraft möglich.

Zur Weiterbildung der voranstehend erläuterten Erfindung wird vorgeschlagen, daß sich die als Tellerfeder ausgebildete Feder mit ihrem Rand in einer Vertiefung im Deckel abstützt. Hierdurch wird eine exakte Positionierung der Tellerfeder am Deckel erreicht und sichergestellt, daß die in der Ansenkung des Kugelzapfens angeordnete Kugel bei einer Auslenkung des Zapfens stets zuverlässig in die Ausgangsstellung zurückgedrückt wird, da die Kugel bei jeder Bewegung in axialer Richtung durch die Kraft der Tellerfeder belastet ist.

Schließlich wird vorgeschlagen, die Lagerschale einstückig aus Polyamid herzustellen. Polyamid und insbesondere Polyamid 66 (PA 66) hat den Vorteil, daß dieser Werkstoff eine Temperaturbeständigkeit bis 150° C aufweist.

Weitere Einzelheiten und Vorteile des Gegenstandes der Erfindung ergeben sich aus der nachfolgenden Beschreibung der zugehörigen Zeichnungen, in denen eine bevorzugte Ausführungsform eines erfindungsgemäß ausgebildeten Zapfengelenks dargestellt ist. In den Zeichnungen zeigen:
- Fig. 1: eine teilweise längsgeschnittene Explosionszeichnung eines erfindungsgemäßen Zapfengelenks;
- Fig. 2: ein teilweise längsgeschnittenes zusammengesetztes Zapfengelenk und

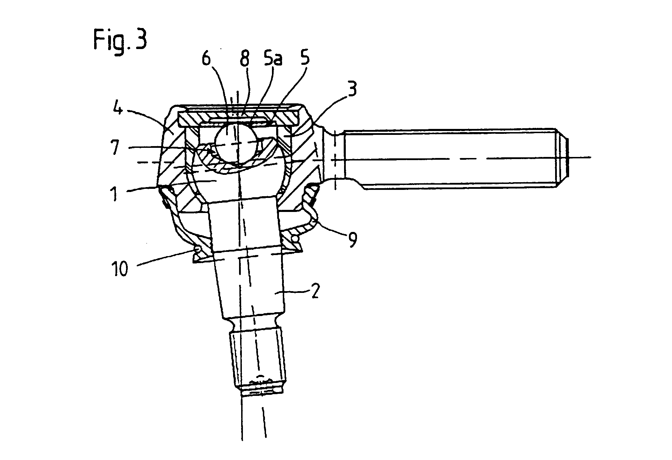

- Fig. 3: ein teilweise längsgeschnittenes zusammengesetztes Zapfengelenk im ausgelenkten Zustand.

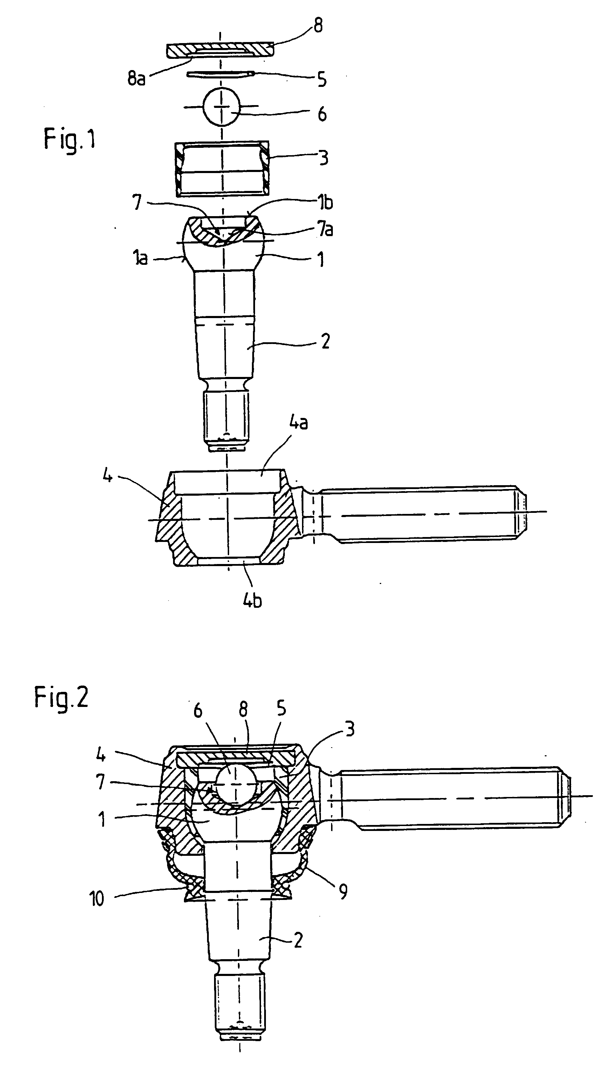

Das in Fig. 2 dargestellte Zapfengelenk besteht im wesentlichen aus einem Kugelzapfen 1 mit daran angeformtem Zapfenschaft 2, wobei der Kugelzapfen 1 verdreh- und verschwenkbeweglich in einer Lagerschale 3 gelagert ist, welche in einem Gehäuse 4 angeordnet ist.

Der in Fig. 1 dargestellten Explosionszeichnung ist der innere Aufbau eines erfindungsgemäßen Zapfengelenkes zu entnehmen. Die als Buchse ausgebildete Lagerschale 3 wird von oben durch eine Montageöffnung 4a in das Gehäuse 4 eingesetzt. Anschließend wird der Kugelzapfen 1 mit dem angeformten Zapfenschaft 2 ebenfalls von oben in das Gehäuse 4 eingesetzt, wobei der Zapfenschaft 2 durch eine Öffnung 4b aus dem Gehäuse 4 herausragt. Der Kugelzapfen 1 wird soweit in das Gehäuse 4 bzw. die Lagerschale 3 eingepreßt, bis die aus einem elastischen Material gebildete Lagerschale 3 eine kugelringförmige Lagerfläche 1a des gelzapfens umschließt.

Um bei einer Auslenkung des Zapfengelenkes die Rückstellung des Zapfengelenks in die Ausgangslage zu gewährleisten, weist das erfindungsgemäß ausgebildete Zapfengelenk eine weitestgehend toleranz- und verschleißunabhängig wirkende Rückstellanordnung auf. Diese Rückstellanordnung setzt sich aus einer Feder 5 und einer Kugel 6 zusammen, welche in einer auf der dem Zapfenschaft 2 gegenüberliegenden Stirnfläche 1b des Kugelzapfens 1 ausgebildeten Ansenkung 7 gelagert ist. Die auf der Kugel 6 aufliegende Feder 5 stützt sich rückseitig an einem Deckel 8 ab, welcher die Montageöffnung 4a des Gehäuses 4 des fertig zusammengesetzten Zapfengelenks verschließt. Zum Verschließen der Montageöffnung 4a wird der Deckel 8 in das Gehäuse 4 eingesetzt und der Rand der Montageöffnung 4a über den Deckel 8 umgebördelt.

Die Rückstellanordnung eines erfindungsgemäßen Zapfengelenks arbeitet folgendermaßen:

Die als Tellerfeder ausgebildete Feder 5 stützt sich mit ihrem Rand in einer Vertiefung 8a des Deckels 8 ab und liegt mit ihrer konvexen Seite so an der Kugel 6 an, daß die Kugel 6, welche auf Kegelflächen 7a der Ansenkung 7 aufliegt teilweise in eine Mittelbohrung 5a der Feder 5 hineinragt. Bei einer Auslenkung des Zapfengelenks aus seiner Ausgangsstellung bewegt sich die Kugel 6 eine bogenförmige Bahn beschreibend aus der Mittelbohrung 5a der Feder 5, wodurch die Feder 5 in axialer Richtung zusammengedrückt und gespannt wird. Durch diese Verformung hat die Feder 5 das Bestreben, wieder in ihre Ursprungsform zurückzukehren. Durch die Federkraft der Feder 5 wird somit die Kugel 6 und damit auch der Kugelzapfen 1 in die Ausgangsstellung zurückgebracht. Durch eine gezielte Auswahl der Federform und des Federmaterials kann eine definierte Rückstellkraft der Feder 5 im Zapfengelenk eingestellt werden.

Bei einem fertig zusammengesetzten Zapfengelenk ist (wie aus Fig. 2 ersichtlich) der Zapfenschaft 2 gegenüber dem Gehäuse 4 durch einen Dichtungsbalg 9 abgedichtet, welcher mit einem Spannring 10 auf dem Zapfenschaft 2 festgelegt ist. Der Dichtungsbalg 9 soll das Eindringen von Schmutz und Feuchtigkeit in das Zapfengelenk verhindern.

### Bezugszeichenliste :

- 1: Kugelzapfen
- 1a: Lagerfläche
- 1b: Stirnfläche
- 2: Zapfenschaft
- 3: Lagerschale
- 4: Gehäuse
- 4a: Montageöffnung
- 4b: Öffnung
- 5: Feder
- 5a: Mittelbohrung
- 6: Kugel
- 7: Ansenkung
- 7a: Kegelfläche
- 8: Deckel
- 8a: Vertiefung
- 9: Dichtungsbalg
- 10: Spannring

## Patentansprüche

1. Zapfengelenk mit einem durch einen Deckel (8) verschlossenen Gehäuse (4), in dem ein Kugelzapfen (1) über eine kugelringförmige Lagerfläche (1a) mittels einer eingesetzten Lagerschale (3) spielfrei verdrehbar und innerhalb eines begrenzten Bereiches entgegen einer Rückstellkraft verschwenkbar gelagert ist, wobei der Kugelzapfen (1) mit einer dem Zapfenschaft (2) gegenüberliegenden kegelförmigen Ansenkung (7) für eine Kugel (6) versehen ist, die zur Erzeugung der Rückstellkraft durch eine sich am Deckel (8) abstützende Feder (5) belastet ist,
**dadurch gekennzeichnet,**
daß die Feder (5) als Tellerfeder ausgebildet ist, die mit ihrer konvexen Seite an der Kugel (6) anliegt und sich mit ihrem Rand am Deckel (8) abstützt.

2. Zapfengelenk nach Anspruch 1, dadurch gekennzeichnet, daß sich die als Tellerfeder ausgebildete Feder (5) mit ihrem Rand in einer Vertiefung (8a) im Deckel (8) abstützt.

3. Zapfengelenk nach Anspruch 1 oder 2, dadurch gekennzeichnet, daß die Lagerschale (3) einstückig aus Polyamid hergestellt ist.

## Claims

1. Pivot joint having a housing (4), which is closed by means of a cover (8) and in which a ball pivot (1) via a spherical ring-shaped bearing surface (la) is supported by means of an inserted bearing shell (3) so as to be rotatable without play and capable of swivelling within a limited range counter to a restoring force, the ball pivot (1) being provided with a conical countersunk portion (7) lying opposite the pivot shank (2) for receiving a ball (6) which, for producing the restoring force, is loaded by a spring (5) supported against the cover (8),
characterized in
that the spring (5) takes the form of a cup spring, which lies with its convex side against the ball (6) and is supported by its edge against the cover (8).

2. Pivot joint according to claim 1, characterized in that the spring (5) in the form of a cup spring is supported by its edge in a recess (8a) in the cover (8).

3. Pivot joint according to claim 1 or 2, characterized in that the bearing shell (3) is manufactured as a single piece made of polyamide.

## Revendications

1. Articulation à pivot comprenant un boîtier (4) qui est fermé par un couvercle (8) et dans lequel un tourillon à rotule (1) est logé avec une possibilité de rotation sans jeu, par l'intermédiaire d'une surface portante en forme d'anneau sphérique (la), au moyen d'une coquille insérée formant coussinet (3) et avec une possibilité de pivotement à l'encontre d'une force de rappel à l'intérieur d'une zone délimitée, le tourillon à rotule (1) étant pourvu d'une fraisure conique (7) située à l'opposé du fût de tourillon (2) et destinée à une rotule (6) qui, pour produire la force de rappel, est sollicitée par un ressort (5) prenant appui sur le couvercle (8), caractérisée en ce que le ressort (5) est conçu sous la forme d'un ressort diaphragme dont la face convexe est appliquée contre la rotule (6) et dont le bord prend appui sur le couvercle (8).

2. Articulation à pivot selon la revendication 1, caractérisée en ce que le bord du ressort (5) conçu sous la forme d'un ressort diaphragme prend appui dans un renfoncement (8a) du couvercle (8).

3. Articulation à pivot selon la revendication 1 ou 2, caractérisée en ce que la coquille formant coussinet (3) est réalisée d'un seul tenant en polyamide.
